# EUROPEAN PATENT APPLICATION

(11) **EP 4 614 321 A1**
(43) Date of publication of application: **10.09.2025**
(21) Application number: 23896438.1
(22) Date of filing: 01.11.2023
(51) Int. Cl.: G06F 9/46

(54) **CLOUD SERVICE-BASED TRANSACTION PROCESSING METHOD AND APPARATUS, AND COMPUTING DEVICE CLUSTER**

(30) Priority: 02.12.2022 CN 202211541526; 27.02.2023 CN 202310171727
(71) Applicant: Huawei Cloud Computing Technologies Co., Ltd., Guiyang, Guizhou 550025 (CN)
(72) Inventor: XIONG, Gang, Guiyang, Guizhou 550025 (CN); PENG, Lixun, Guiyang, Guizhou 550025 (CN); XU, Yousong, Guiyang, Guizhou 550025 (CN)
(74) Representative: MERH-IP Matias Erny Reichl Hoffmann Patentanwälte PartG mbB
(86) International application number: PCT/CN2023/129155
(87) International publication number: WO 2024/114284

(57) **Abstract**

Embodiments of this application disclose a cloud service-based transaction processing method and apparatus, and a computing device cluster, and belong to the field of database technologies. When receiving a transaction processing request that includes both a read operation and a write operation, a proxy node sends the write operation to a master node, and sends the read operation to a replica node. The replica node synchronizes a redo log generated based on the write operation, and further, may read data corresponding to the write operation by using a modification record generated during processing of the redo log. In this way, the master node does not need to process the read operation, so that load pressure of the master node can be reduced, and load balancing can be improved.

## Description

This application claims priority to Chinese Patent Application No. 202211541526.1, filed on December 2, 2022 and entitled "DATA PROCESSING METHOD AND DATABASE SYSTEM", and to Chinese Patent Application No. 202310171727.5, filed on February 27, 2023 and entitled "CLOUD SERVICE-BASED TRANSACTION PROCESSING METHOD AND APPARATUS, AND COMPUTING DEVICE CLUSTER", which are incorporated herein by reference in their entireties.

### TECHNICAL FIELD

This application relates to the field of database technologies, and in particular, to a cloud service-based transaction processing method and apparatus, and a computing device cluster.

### BACKGROUND

A relational database management system (relational database management system, RDBMS) is common database management software. A computer device cluster that uses the RDBMS includes a proxy node (proxy), a master node (master node), and a plurality of replica nodes (read replica nodes). Both the master node and the replica node are used for data storage. The replica node can be considered as a mirror of the master node. Operations such as reading and writing data are generally implemented by delivering transactions to nodes.

When the proxy node receives a transaction processing request from a user, if the transaction processing request includes only a write operation, the proxy node may send the write operation to the master node for processing, or if the transaction processing request includes only a read operation, the proxy node may send the read operation to any replica node to read data, or if the transaction processing request includes both the read operation and the write operation, the proxy node may send both the read operation and the write operation in the transaction processing request to the master node for processing.

In a related technology, during transaction distribution, the master node is easily overloaded, and load balancing is poor.

### SUMMARY

To resolve a related technical problem, embodiments of this application provide a cloud service-based transaction processing method and apparatus, and a computing device cluster. Technical solutions are as follows.

According to a first aspect, a cloud service-based transaction processing method is provided. The method is performed by a target replica node of a cloud storage system. The method includes: After receiving a redo log sent by a master node, the target replica node processes the redo log and sends a log reception notification to a proxy node; and after receiving a read operation, the target replica node reads, based on a modification record generated during processing of the redo log, data corresponding to the read operation, and sends the data to the proxy node.

The redo log includes a write operation. The log reception notification indicates that the target replica node has received the redo log that is sent by the master node and that corresponds to the write operation. The read operation belongs to a same transaction as the write operation in the redo log.

In the solution shown in this embodiment of this application, when processing the redo log, the target replica node may replay the redo log to generate a target transaction, and execute the target transaction to generate the modification record. After receiving the read operation, the target replica node may further obtain a first replica channel identifier corresponding to the read operation. Further, the target replica node determines, based on the first replica channel identifier and the modification record, the data to be read based on the read operation.

In this way, the target replica node may process a read operation in a transaction processing request, to share load pressure of the master node, and load balancing can be improved.

In a possible implementation, the redo log may further include a first master channel identifier. Before the data corresponding to the read operation is determined, the first replica channel identifier corresponding to the read operation sent by the proxy node may be further obtained first. Further, the modification record generated during processing of the redo log may be obtained based on the first replica channel identifier.

The first master channel identifier corresponds to a first master channel between the proxy node and the master node, and the first master channel is used to transmit a write operation of target user equipment. The first replica channel identifier corresponds to a first replica channel between the proxy node and the target replica node, and the first replica channel is used to transmit a read operation of the target user equipment.

In the solution shown in this embodiment of this application, the target replica node may directly obtain the target transaction based on the first replica channel identifier corresponding to the read operation, and then obtain the corresponding modification record based on the target transaction. Alternatively, the target replica node may determine, based on the first replica channel identifier corresponding to the read operation, the first master channel identifier or a master/replica channel identifier corresponding to the first replica channel identifier, then determine the target transaction based on the first master channel identifier or the master/replica channel identifier, and finally, determine the corresponding modification record based on the target transaction.

In this way, the first master channel identifier is added into the redo log, so that the corresponding modification record can be determined, to read the data. This ensures that the data to be read based on the read operation can be read on the target replica node, to share the load pressure of the master node, and the load balancing is improved.

In a possible implementation, the target transaction that is established during processing of the redo log and that corresponds to the redo log may be first determined based on the first replica channel identifier. Further, a modification record corresponding to the target transaction is obtained.

In the solution shown in this embodiment of this application, when the modification record corresponding to the target transaction is obtained, an identifier of the target transaction may be compared with an identifier of a transaction in a latest modification record, to determine whether the transaction in the latest modification record is the target transaction. If the transaction in the latest modification record is the target transaction, data modified in the latest modification record may be read. If the transaction in the latest modification record is not the target transaction, whether the target transaction is committed may be determined. If the target transaction is committed, data that is written to the disk may be directly read. If the target transaction is not committed, data is not read.

In this way, the modification record can be quickly found, and processing efficiency is improved.

In a possible implementation, the target replica node may store a first correspondence between a master channel identifier and a replica channel identifier. The target replica node may correspondingly add, during processing of the redo log, the first master channel identifier in the redo log and the target transaction into a second correspondence between a master channel identifier and a transaction. When receiving the read operation, the target replica node may first determine, based on the first correspondence, the first master channel identifier corresponding to the first replica channel identifier, and then determine, based on the second correspondence, the target transaction corresponding to the first master channel identifier.

In this way, the target replica node may establish correspondence tables, to quickly determine corresponding identification information after receiving the read operation, so as to read the data in the modification record. The load pressure of the master node is shared, and the load balancing is improved.

In a possible implementation, the target replica node may store a first correspondence between a master channel identifier and a replica channel identifier. During processing of the redo log, the target replica node may first determine, based on the first correspondence, the first replica channel identifier corresponding to the first master channel identifier in the redo log, and then correspondingly add the first replica channel identifier and the target transaction into a third correspondence between a replica channel identifier and the transaction. In this way, when receiving the read operation, the target replica node may find the target transaction in the third correspondence based on the first replica channel identifier.

In this way, the target replica node may establish correspondence tables, to quickly determine corresponding identification information after receiving the read operation, so as to read the data in the modification record. The load pressure of the master node is shared, and the load balancing is improved.

In a possible implementation, it may be determined that the modification record generated during processing of the redo log is not written to the disk.

In the solution shown in this embodiment of this application, whether data modified in the modification record is written to the disk may be determined. If the data is written to the disk, the data that is written to the disk may be directly read. If the data is not written to the disk, related data can be read from the modification record.

In this way, the modified data may be determined in advance, to determine a subsequent operation, so that data reading efficiency can be improved.

According to a second aspect, a cloud service-based transaction processing method is provided. The method is performed by a proxy node of a cloud storage system. The method includes: After receiving a transaction processing request sent by target user equipment, the proxy node may send a write operation in the transaction processing request to a master node. After receiving a log reception notification sent by at least one replica node, the proxy node sends a read operation in the transaction processing request to a target replica node. The proxy node sends, to the target user equipment, received data that is fed back by the target replica node and that corresponds to the read operation.

The log reception notification indicates that the replica node has received a redo log that is sent by the master node and that corresponds to the write operation.

In the solution shown in this embodiment of this application, when receiving the transaction processing request, the proxy node may first determine the read operation and the write operation in the transaction processing request, send the write operation to the master node, and send the read operation to the replica node. After receiving a 1^{st} log reception notification sent by a replica node, the proxy node may send the read operation to a 1^{st} replica node that receives the redo log. Alternatively, after receiving log reception notifications sent by all replica nodes or replica nodes with a specified data amount, the proxy node selects the target replica node from all replica nodes or a specific quantity of replica nodes according to a preset rule for selecting the target replica node, and sends the read operation to the selected target replica node. The rule for selecting the target replica node may be random selection, or may be selection based on load balancing of a plurality of replica nodes.

In this way, the proxy node distributes the read operation and the write operation to different types of nodes, so that load of the different types of nodes can be balanced.

In a possible implementation, after receiving the 1^{st} log reception notification, the proxy node may send the read operation to the target replica node that sends the log reception notification.

In this way, efficiency of the proxy node in processing the read operation can be improved.

In a possible implementation, after receiving the log reception notifications sent by all replica nodes, the proxy node selects the target replica node, and sends the read operation to the target replica node.

In the solution shown in this embodiment of this application, the target replica node may be selected based on load statuses of all replica nodes.

In this way, load of the plurality of replica nodes can be balanced.

In a possible implementation, the redo log includes a first master channel identifier, the first master channel identifier corresponds to a first master channel between the proxy node and the master node, and the first master channel is used to transmit a write operation of the target user equipment. After the log reception notification sent by the at least one replica node is received, the read operation and a first replica channel identifier corresponding to the read operation may be sent to the target replica node.

The first replica channel identifier corresponds to a first replica channel between the proxy node and the target replica node, and the first replica channel is used to transmit a read operation of the target user equipment.

In this way, the first replica channel identifier is sent to the target replica node, so that the data corresponding to the read operation can be read on the target replica node, and the data can be read without sending the read operation in the transaction processing request to the master node. This improves load balance.

According to a third aspect, a cloud service-based transaction processing apparatus is provided. The apparatus includes at least one module. The at least one module is configured to implement the cloud service-based transaction processing method provided in the first aspect and the possible implementations of the first aspect.

According to a fourth aspect, a cloud service-based transaction processing apparatus is provided. The apparatus includes at least one module. The at least one module is configured to implement the cloud service-based transaction processing method provided in the second aspect and the possible implementations of the second aspect.

According to a fifth aspect, a computing device cluster is provided. The computing device cluster includes at least one computing device. Each computing device includes a processor and a memory.

The processor of the at least one computing device is configured to execute instructions stored in the memory of the at least one computing device, to enable the computing device cluster to perform the method according to the first aspect and the second aspect.

According to a sixth aspect, a computer program product including instructions is provided. When the computer program product is run on a target replica node, the target replica node is enabled to perform the method according to the first aspect.

According to a seventh aspect, a computer program product including instructions is provided. When the computer program product is run on a proxy node, the proxy node is enabled to perform the method according to the second aspect.

According to an eighth aspect, a computer-readable storage medium is provided. The computer-readable storage medium includes instructions. When the computer-readable storage medium is run on a target replica node, the target replica node is enabled to perform the method according to the first aspect.

According to a ninth aspect, a computer-readable storage medium is provided. The computer-readable storage medium includes instructions. When the computer-readable storage medium is run on a proxy node, the proxy node is enabled to perform the method according to the second aspect.

### BRIEF DESCRIPTION OF DRAWINGS

FIG. 1 is a diagram of a structure of a cloud storage system according to an embodiment of this application;
FIG. 2A and FIG. 2B are a schematic flowchart of a cloud service-based transaction processing method according to an embodiment of this application;
FIG. 3 is a diagram of distributing a read operation and a write operation according to an embodiment of this application;
FIG. 4 is a diagram of distributing a read request and a write request according to an embodiment of this application;
FIG. 5 is a diagram of a structure of a cloud service-based transaction processing apparatus according to an embodiment of this application;
FIG. 6 is a diagram of a structure of a cloud service-based transaction processing apparatus according to an embodiment of this application;
FIG. 7 is a diagram of a structure of a computing device according to an embodiment of this application;
FIG. 8 is a diagram of a structure of a computing device cluster according to an embodiment of this application; and
FIG. 9 is a diagram of communication between computing devices in a computing device cluster according to an embodiment of this application.

### DESCRIPTION OF EMBODIMENTS

Several nouns in embodiments of these embodiments are described below.

Relational database management system (relational database management system, RDBMS): is management software for data access.

Transaction (transaction): In the field of computer technologies, the transaction is a program statement for accessing or modifying a data item in a database, and may be a structured query language (structured query language, SQL) statement, or may be a group of SQL statements.

Modification record: includes a plurality of pieces of content such as modification time, a transaction identifier, and modified data, may indicate specific modification made by a specific transaction to a specific data item at specific time, and may be used to read data modified by an uncommitted transaction.

Multi-version concurrency control read view (multi-version concurrency control read view, MVCC Read View): is a view of all uncommitted transactions in a database at a specific time point.

Redo log (redo log): is also referred to as a re-do log, and mainly records a data modification status during transaction execution.

Proxy node: is a forwarder between an access object (a user terminal) and a target object (a server that stores data, such as a master node or a replica node), and may be used to distribute various types of requests to implement load balancing of a data storage system. The proxy node may be a proxy (proxy), for example, may be a proxy server in a cluster or a cloud platform. The proxy node may alternatively be a connector (connector). The connector may be deployed in an application of the user terminal, may provide an address list for a plurality nodes, and is used to connect to a plurality of nodes in the cluster or the cloud platform at the same time.

Master node (master node): is mainly used to perform a write operation, and may be a physical host, a virtual machine, a container, or the like.

Replica node (read replica node): is mainly used to perform a read operation, and may be a physical host, a virtual machine, a container, or the like.

Virtual machine (virtual machine): is a complete computer system that is simulated by using software, has functions of a complete hardware system, and runs in a totally isolated environment. All tasks that can be completed on a server can be implemented on the virtual machine. When the virtual machine is created on the server, a part of a hard disk and a part of a memory capacity of a physical machine need to be used as a hard disk and a memory capacity of the virtual machine. Each virtual machine has an independent hard disk and operating system. A user of the virtual machine can operate the virtual machine like the physical machine.

Container: isolates an application process and a dependency package of the application process (running environment bins/libs, which are specifically all files required for running the application) in an independent running environment by using namespace (namespace) and control groups (control groups, cgroups) technologies supported by a Linux kernel.

Log sequence number (log sequence number, LSN): is a number of a redo log.

Write operation: is an operation instruction for modifying data in a database, an operation instruction for adding data, or the like. When a user needs to perform a transfer operation, user equipment sends a corresponding transaction processing request to a background server of a related application based on the operation of the user. The transaction processing request includes a write operation, and the write operation is an operation instruction for modifying a balance of an account of the user.

Read operation: is an operation instruction for reading data in a database. For example, when a user wants to view a balance in an account of the user, the user may enter a personal account interface by performing a tapping operation. In this case, user equipment sends a corresponding transaction processing request to a background server of a related application based on the operation of the user. The transaction processing request includes a read operation, and the read operation is an operation instruction for viewing a balance of the account by the user.

Master channel identifier: is a unique identifier of a master channel. The master channel is a logical channel that is assigned to single user equipment and located between a proxy node and a master node. One master channel is used to transmit a write operation of one user equipment.

Replica channel identifier: is a unique identifier of a replica channel. The replica channel is a logical channel that is assigned to single user equipment and located between a proxy node and a replica node. One replica channel is used to transmit a read operation of one user equipment.

In the field of storage technologies, during data management, data may be read and written through each node in a cloud storage system. When receiving a transaction processing request from user equipment, a proxy node sends a write operation in the transaction processing request to a master node, and sends a read operation in the transaction processing request to a replica node. Each replica node may synchronize, by using a redo log, data written to the master node.

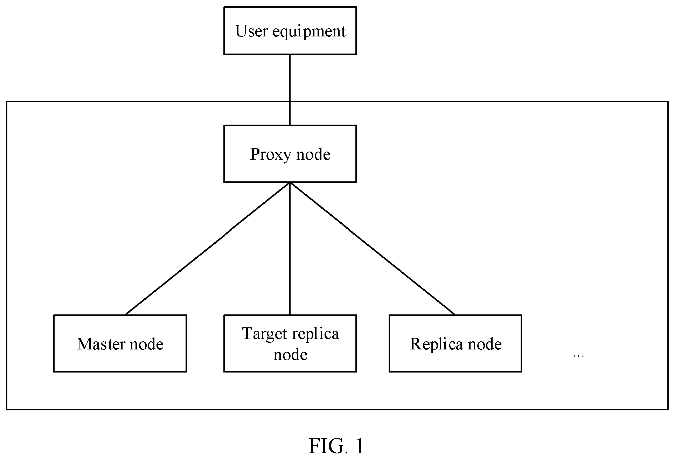

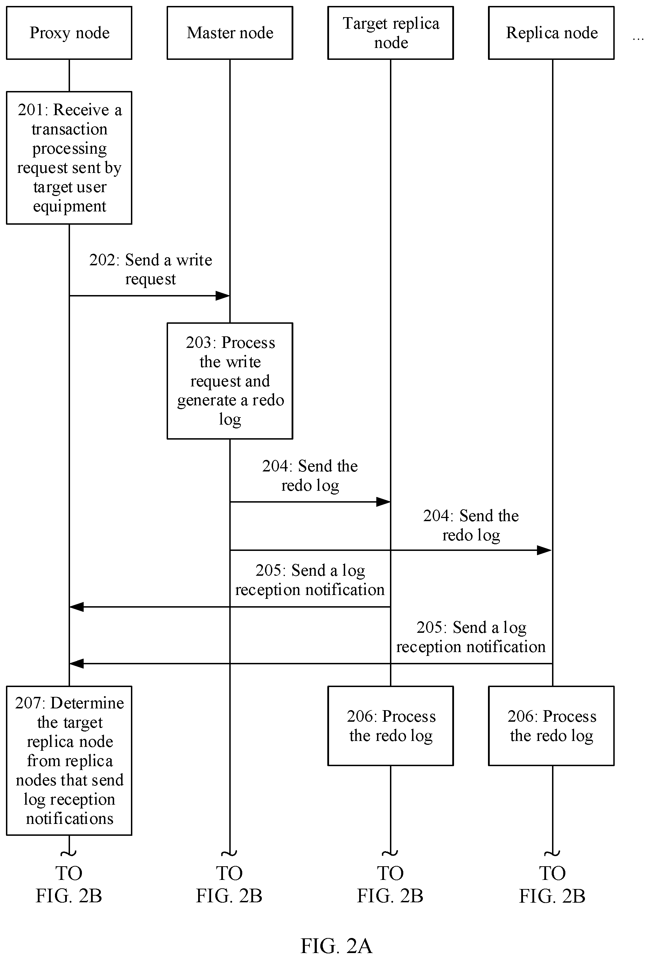

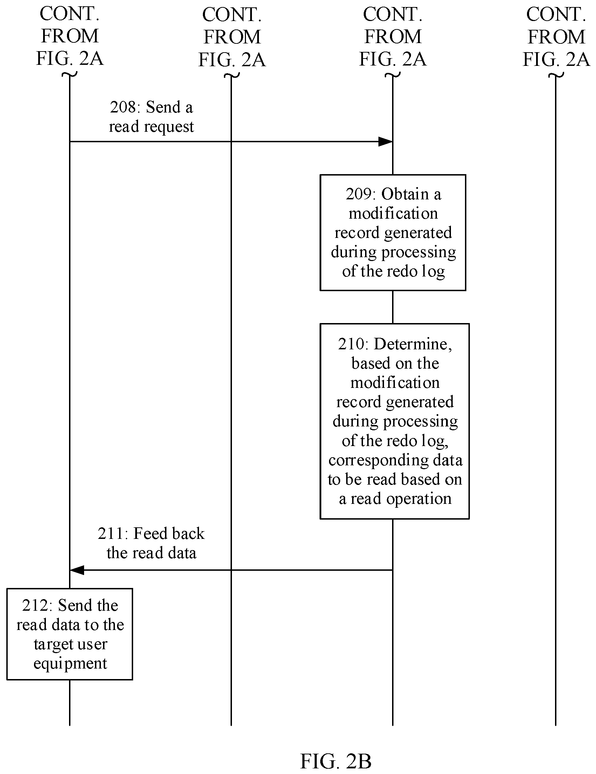

An embodiment of this application provides a cloud service-based transaction processing method. The method may be performed by nodes in a cloud storage system in cooperation. The cloud storage system may include a proxy node, a master node, and a plurality of replica nodes. A structure of the cloud storage system may be shown in FIG. 1. A processing procedure of the method may be shown in FIG. 2A and FIG. 2B, and includes the following processing steps.

201: The proxy node receives a transaction processing request sent by target user equipment.

The transaction processing request includes a write operation, a read operation, an identifier of the target user equipment, and the like. The proxy node may store a correspondence between a user equipment identifier, a master channel identifier, and a replica channel identifier.

During implementation, the cloud storage system may be a background server cluster of an application. After a user performs some specific operations on a terminal, the terminal sends a corresponding transaction processing request to the proxy node based on an operation of the user or based on an instruction for automatically processing data. If the transaction processing request received by the proxy node includes a new user equipment identifier, a master channel identifier and a replica channel identifier may be first assigned to the user equipment identifier and stored. If the transaction processing request received by the proxy node includes an existing user equipment identifier, after receiving the user equipment identifier, the proxy node may first determine a first master channel identifier and a first replica channel identifier corresponding to the user equipment identifier.

For example, when the user comments on a video or an article on a platform, the user may enter a comment in a comment input box and submit the comment. In this case, user equipment sends a corresponding transaction processing request to a background server based on an operation of submitting the comment by the user. The request includes both a write operation of commenting by the user and a read operation performed by the user on all comments.

202: The proxy node sends a write request to the master node.

The write request includes the write operation, the user equipment identifier, the first master channel identifier, and the like.

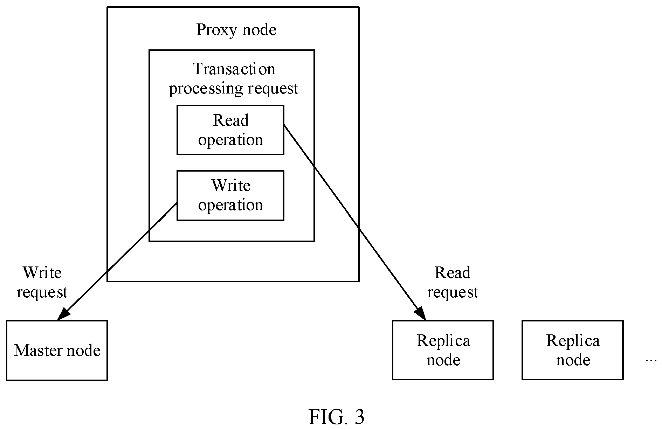

During implementation, after receiving the transaction processing request, the proxy node may further determine the read operation and the write operation in the transaction processing request. Then, the write operation and the determined first master channel identifier may be added into the write request and sent to the master node, or the write operation and the target user equipment identifier may be added into the write request and sent to the master node. For example, refer to FIG. 3.

In addition, for the transaction processing request, after sending the write request corresponding to the transaction processing request to the master node, the proxy node monitors a log sequence number sent by the master node. After receiving the log sequence number sent by the master node, the proxy node monitors a log sequence number sent by a replica node, and stops a monitoring process of the transaction processing request until a log sequence number that is equal to the log sequence number sent by the master node is received.

203: The master node processes the write request and generates a redo log.

The master node may store a list of master channel identifiers, or may store a correspondence between a user equipment identifier and a master channel identifier. The master node may further store a first correspondence between a master channel identifier and a replica channel identifier of each user equipment. The redo log includes the write operation and the first master channel identifier. The first master channel identifier corresponds to a first master channel between the proxy node and the master node. The first master channel is used to transmit a write operation of the target user equipment.

During implementation, after receiving the write request sent by the proxy node, the master node processes the write request and generates the redo log. After the redo log is generated, a log sequence number of the redo log is sent to the proxy node. In addition, the redo log is replayed to generate a target transaction. The target transaction includes information such as a transaction identifier and the write operation. After the target transaction is generated, a corresponding modification record may be generated based on the target transaction. The modification record includes the transaction identifier of the target transaction, and may be used to read data.

204: The master node sends the redo log to each replica node.

During implementation, the master node may directly send the redo log to each replica node, or may forward the redo log to each replica node through the proxy node.

205: Each replica node sends a log reception notification to the proxy node.

The log reception notification indicates that a target replica node has received the redo log that is sent by the master node and that corresponds to the write operation.

During implementation, after receiving the redo log, a replica node sends a log reception notification to the proxy node. The log reception notification carries the log sequence number of the redo log. After receiving the log sequence number sent by the replica node, the proxy node may compare the log sequence number with the log sequence number sent by the master node. When the log sequence number that is received by the proxy node and is sent by the replica node is equal to the log sequence number sent by the master node, it indicates that the replica node has received the redo log that is sent by the master node and that corresponds to the write operation. In this case, the proxy node may send, to the replica node, the read operation in the transaction processing request corresponding to the write request.

206: Each replica node processes the redo log.

Each replica node may store a list of replica channel identifiers. For example, replica channel identifiers stored on a replica node Y are Y_A, Y_B, Y_C, and the like, and replica channel identifiers stored on a replica node Z are Z_A, Z_B, and Z_C. Alternatively, each replica node may store a correspondence between a user equipment identifier and a replica channel identifier. Each replica node may further store a correspondence between a master channel identifier and a replica channel identifier. For example, in Table 1, a corresponding master channel identifier and replica channel identifier in the correspondence belong to same user equipment. Each replica node may further store a second correspondence (for example, in Table 2) between a master channel identifier and a transaction, a third correspondence (for example, in Table 3) between a replica channel identifier and a transaction, or a fourth correspondence (for example, in Table 4) between a master/replica channel identifier pair and a transaction.

**Table 1**

| Master channel identifier | Replica channel identifier |
|---|---|
| X_A | Y_A |
| X_B | Y_B |
| X_C | Y_C |
| ··· | ··· |

**Table 2**

| Master channel identifier | Transaction |
|---|---|
| X_A | Transaction 1 |
| X_B | Transaction 2 |
| X_C | Transaction 3 |
| _{···} | _{···} |

**Table 3**

| Replica channel identifier | Transaction |
|---|---|
| Y_A | Transaction 1 |
| Y_B | Transaction 2 |
| Y_C | Transaction 3 |
| ... | ... |

**Table 4**

| Master/Replica channel identifier pair | Transaction |
|---|---|
| X_A+Y_A | Transaction 1 |
| X_B+Y_B | Transaction 2 |
| X_C+Y_C | Transaction 3 |
| ... | ... |

During implementation, after receiving the redo log sent by the master node, each replica node may further replay the redo log in addition to sending the log reception notification to the proxy node, to generate the target transaction. In addition, the target transaction is executed, and a corresponding modification record is finally generated.

During processing of the redo log, each replica node may further perform the following three processes.

First, each replica node correspondingly adds the first master channel identifier in the redo log and the target transaction that is established during processing of the redo log and that corresponds to the redo log into the second correspondence between a master channel identifier and a transaction. For example, the first master channel identifier in the redo log is X_M, the established target transaction is a transaction 13, and the second correspondence may be shown in Table 5.

**Table 5**

| Master channel identifier | Transaction |
|---|---|
| X_A | Transaction 1 |
| X_B | Transaction 2 |
| X_C | Transaction 3 |
| ... | ... |
| X_M | Transaction 13 |
| ... | ... |

Second, each replica node determines, based on the first correspondence, the first replica channel identifier corresponding to the first master channel identifier in the redo log, and correspondingly add the first replica channel identifier and the target transaction that is established during processing of the redo log and that corresponds to the redo log into the second correspondence between a replica channel identifier and a transaction. For example, the first master channel identifier in the redo log is X_M, it is determined that the corresponding first replica channel identifier is Y_M, the established target transaction is the transaction 13, and the second correspondence may be shown in Table 6.

**Table 6**

| Replica channel identifier | Transaction |
|---|---|
| Y_A | Transaction 1 |
| Y_B | Transaction 2 |
| Y_C | Transaction 3 |
| ... | ... |
| Y_M | Transaction 13 |
| ... | ... |

Third, each replica node determines the first correspondence corresponding to the first master channel identifier of the redo log, and correspondingly adds the first correspondence and the target transaction established during processing of the redo log into a correspondence between the first correspondence and a transaction. For example, the first master channel identifier in the redo log is X_M, it is determined that the corresponding first replica channel identifier is X_M+Y_M, and the established target transaction is the transaction 13. The second correspondence may be shown in Table 7.

**Table 7**

| Master/Replica channel identifier pair | Transaction |
|---|---|
| X_A+Y_A | Transaction 1 |
| X_B+Y_B | Transaction 2 |
| X_C+Y_C | Transaction 3 |
| ... | ... |
| X_M+Y_M | Transaction 13 |
| ... | ... |

207: The proxy node determines the target replica node from the replica nodes that send log reception notifications.

During implementation, the proxy node may determine the target replica node in a plurality of manners.

Manner 1: After receiving a 1^{st} log reception notification, the proxy node uses a replica node that sends the 1^{st} log reception notification as the target replica node.

Manner 2: After receiving log reception notifications sent by all replica nodes in the plurality of replica nodes, the proxy node randomly selects one or more replica nodes as the target replica node.

Manner 3: After receiving log reception notifications sent by all replica nodes in the plurality of replica nodes, the proxy node selects one or more replica nodes as the target replica node based on a current processing resource occupation status of each replica node. The processing resource occupation status of each replica node may be sorted in ascending order or descending order, and a replica node sorted in a specified sequence is used as the target replica node.

208: The proxy node sends a read request to the target replica node.

The read request includes the read operation and the first replica channel identifier corresponding to the read operation.

During implementation, after determining the target replica node, the proxy node may add the first replica channel identifier and the read operation that are determined in step 101 into the read request, or may add the identifier of the target user equipment and the read operation into the read request, or may add the identifier of the target user equipment, the first replica channel identifier, and the read operation into the read request. For example, refer to FIG. 3.

209: The target replica node obtains a modification record generated during processing of the redo log.

During implementation, after receiving the read request, the target replica node may determine a corresponding modification record based on the first replica channel identifier carried in the read request, or may determine, based on the user equipment identifier in the read request, the corresponding first replica channel identifier in the correspondence, stored in the target replica node, between a user equipment identifier and a replica channel identifier, and further determine the corresponding modification record based on the first replica channel identifier. Specific steps of obtaining, by the target replica node based on the first replica channel identifier, the modification record generated during processing of the redo log may include the following steps.

Step 1: The target replica node determines, based on the first replica channel identifier, the target transaction that is established during processing of the redo log and that corresponds to the redo log.

Corresponding to the first processing manner in step 205, the target replica node determines, based on the first correspondence, the first master channel identifier corresponding to the first replica channel identifier, and determines, based on the second correspondence, the target transaction corresponding to the first master channel identifier. For example, the first replica channel identifier is Y_M, and X_M corresponding to Y_M may be determined from the first correspondence. Further, the transaction 13 corresponding to X_M is determined from the second correspondence based on X_M. Corresponding to the second processing manner in step 205, the target replica node searches the second correspondence for the corresponding target transaction based on the first replica channel identifier. For example, the first replica channel identifier is Y_M, and the transaction 13 corresponding to Y_M is determined from the second correspondence.

Corresponding to the third processing manner in step 205, the target replica node determines, based on the first replica channel identifier, the first correspondence corresponding to the first replica channel identifier, and further determines, from the second correspondence based on the first correspondence, the target transaction corresponding to the first correspondence. For example, the first replica channel identifier is Y_M, X_M+Y_M is determined based on Y_M, and the transaction 13 corresponding to X_M+Y_M is further determined.

Step 2: The target replica node obtains a modification record corresponding to the target transaction.

During implementation, the target replica node may determine a latest modification record from a modification record of an MVCC snapshot, and determine a transaction identifier corresponding to the latest modification record. The target replica node may compare the transaction identifier of the determined target transaction with the transaction identifier in the latest modification record. If the two transaction identifiers are the same, it indicates that the modification record is visible, that is, data corresponding to the read request may be queried based on the modification record. If the transaction identifier of the target transaction is different from that of a transaction in the latest modification record, visibility of the modification record may be determined in a conventional manner. For example, the target replica node may determine whether the target transaction is committed (that is, determine whether the modification record corresponding to the target transaction is written to the disk), and if the target transaction is committed, data that is written to the disk may be read.

210: The target replica node determines, based on the modification record generated during processing of the redo log, corresponding data to be read based on the read operation.

During implementation, if the target transaction is not committed, modified data may be found from the determined modification record, and the data is read. For example, the determined modification record may be shown in Table 8. When it is determined that the modified data corresponding to a transaction 1 is "A", "A" is read.

**Table 8**

| Modification time | Transaction identifier | Modified data | Data identifier | ... |
|---|---|---|---|---|
| T1 | Transaction 1 | A | Data 1 | ... |

211: The target replica node feeds back the read data to the proxy node.

212: The proxy node sends the read data to the target user equipment.

During implementation, the target user equipment may obtain related data and perform corresponding processing. For example, after transfer succeeds, the user can see that account balance of the user is reduced by a corresponding transfer amount.

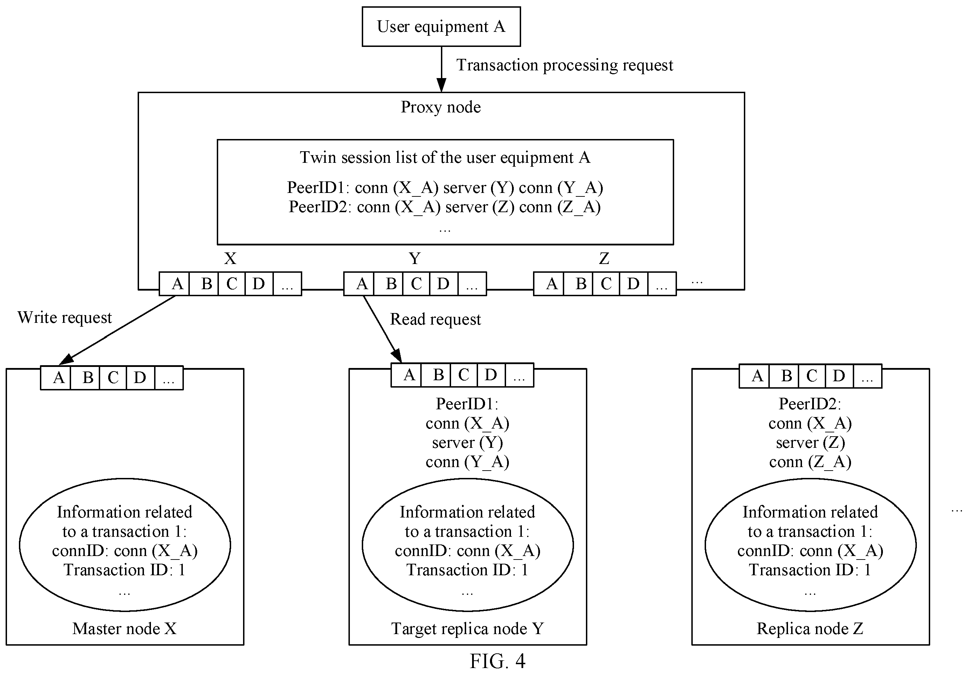

In a possible implementation, a master channel identifier may be a source connection identifier (source connection identity document, source connection ID), and a replica channel identifier may be a target connection identifier (target connection identity document, target connection ID). A proxy node stores a twin session list (twin session list) corresponding to each user equipment. For example, as shown in FIG. 4, for user equipment A, a corresponding twin session list of the user equipment A includes a plurality of peer identifiers (peer identity document, PeerID), and each PeerID includes a source connection ID, a target ID, and a corresponding replica node identifier corresponding to the user equipment A. For example, PeerID1 is conn (X_A) server Y conn (Y_A), where conn (X_A) is a source connection ID, a server Y is a replica node identifier, and conn (Y_A) is a target ID.

When receiving a write request from the user equipment A, a master node X determines that a source connection ID corresponding to the write request is conn (X_A). In addition, the master node generates a corresponding redo log based on a write operation in the write request, adds the determined source connection ID into the redo log, and sends the redo log to each replica node. The master node establishes a target transaction based on the redo log, and correspondingly stores the determined source connection ID and the target transaction in a twin transaction apparatus of the master node.

Each replica node receives the redo log sent by the master node X and processes the redo log. The following uses processing by a target replica node Y for the redo log as an example for description. A processing manner of another replica node is the same as that of the target replica node Y, and details are not described herein again. After receiving the redo log sent by the master node X, the target replica node Y obtains the source connection ID from the redo log, and replays the redo log to generate a target transaction. Further, the generated target transaction and the source connection ID are stored in a twin transaction apparatus of the target replica node Y.

After receiving a read request from the user equipment A, the target replica node Y determines, based on a PeerID list of the target replica node Y, that the PeerID corresponding to the user equipment A is conn (X_A) server Y conn (Y_A). Further, it may be determined that the source connection ID corresponding to the read request is conn (X_A). Then, in the twin transaction apparatus of the target replica node Y, it is determined that a transaction identifier corresponding to conn (X_A) is "1". The target replica node Y constructs an MVCC snapshot including the transaction identifier = "1", scans a modification record based on the MVCC snapshot, determines a corresponding modification record based on the transaction identifier, then reads modified data in the determined modification record, and returns the read data to the proxy node, and the proxy node returns the read data to the user equipment.

In this embodiment of this application, when receiving a transaction processing request that includes both a read operation and a write operation, the proxy node sends the write operation to the master node, and sends the read operation to the replica node. The replica node synchronizes a redo log generated based on the write operation, and further, may read data corresponding to the write operation by using a modification record generated during processing of the redo log. In this way, the master node does not need to process the read operation, so that load pressure of the master node can be reduced, and load balancing can be improved.

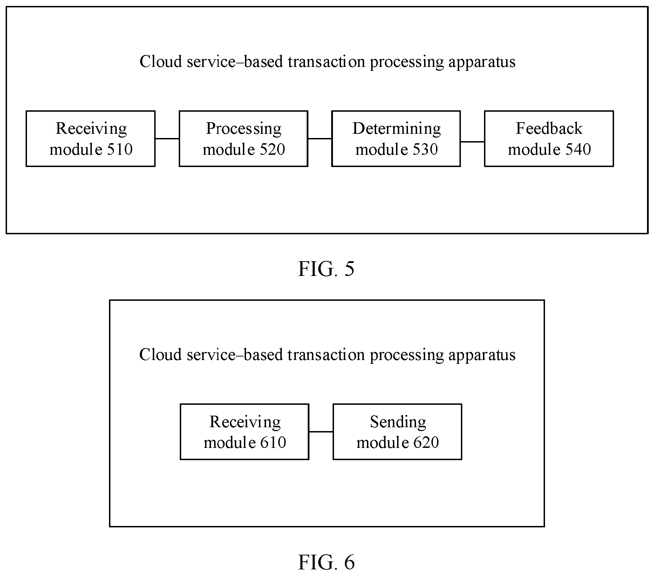

Based on a same technical concept, an embodiment of this application further provides a cloud service-based transaction processing apparatus. As shown in FIG. 5, the apparatus is used in a target replica node of a cloud storage system. The cloud storage system includes a proxy node, a master node, and a plurality of replica nodes. The plurality of replica nodes include the target replica node. The apparatus includes the following modules.

A receiving module 510 is configured to receive a redo log sent by the master node, where the redo log includes a write operation. The receiving module 510 may specifically implement a receiving function in step 206 and another implicit step.

A processing module 520 is configured to: process the redo log and send a log reception notification to the proxy node, where the log reception notification indicates that the target replica node has received the redo log that is sent by the master node and that corresponds to the write operation. The processing module 520 may specifically implement a processing function in step 206 and another implicit step.

The receiving module 510 is further configured to receive a read operation that is sent by the proxy node and that belongs to a same transaction as the write operation. The receiving module 510 may specifically implement a receiving function in step 208 and another implicit step.

A determining module 530 is configured to determine, based on a modification record generated during processing of the redo log, data corresponding to the read operation. The determining module 530 may specifically implement a determining function in step 210 and another implicit step.

A feedback module 540 is configured to feed back the data to the proxy node. The feedback module 540 may specifically implement a feedback function in step 211 and another implicit step.

In a possible implementation, the redo log further includes a first master channel identifier, the first master channel identifier corresponds to a first master channel between the proxy node and the master node, and the first master channel is used to transmit a write operation of target user equipment.

The determining module 530 is further configured to:
obtain a first replica channel identifier corresponding to the read operation sent by the proxy node, where the first replica channel identifier corresponds to a first replica channel between the proxy node and the target replica node, and the first replica channel is used to transmit a read operation of the target user equipment; and
obtain, based on the first replica channel identifier, the modification record generated during processing of the redo log.

In a possible implementation, the determining module 530 is configured to:
determine, based on the first replica channel identifier, a target transaction that is established during processing of the redo log and that corresponds to the redo log; and
obtain a modification record corresponding to the target transaction.

In a possible implementation, the target replica node stores a first correspondence between a master channel identifier and a replica channel identifier.

The apparatus further includes the following modules.

An adding module 550 is configured to correspondingly add, during processing of the redo log, the first master channel identifier in the redo log and the target transaction that is established during processing of the redo log and that corresponds to the redo log into a second correspondence between a master channel identifier and a transaction. The adding module 550 may specifically implement an adding function in the step 206 and another implicit step.

The determining module 530 is configured to:
determine, based on the first correspondence, the first master channel identifier corresponding to the first replica channel identifier; and
determine, based on the second correspondence, the target transaction corresponding to the first master channel identifier.

In a possible implementation, the target replica node stores the first correspondence between a master channel identifier and a replica channel identifier.

The adding module 550 is further configured to:
during processing of the redo log, determine, based on the first correspondence, the first replica channel identifier corresponding to the first master channel identifier in the redo log; and correspondingly add the first replica channel identifier and the target transaction that is established during processing of the redo log and that corresponds to the redo log into a third correspondence between a replica channel identifier and a transaction.

The determining module 530 is configured to:
search the third correspondence for the corresponding target transaction based on the first replica channel identifier.

In a possible implementation, the determining module 530 is further configured to:
determine that the modification record generated during processing of the redo log is not written to a disk.

The receiving module 510, the processing module 520, the determining module 530, and the feedback module 540 may all be implemented by using software, or may be implemented by using hardware. For example, the following uses the receiving module 510 as an example to describe an implementation of the receiving module 510. Similarly, for implementations of the processing module 520, the determining module 530, and the feedback module 540, refer to the implementation of the receiving module 510.

A module is used as an example of a software functional unit, and the receiving module 510 may include code that is run on a computing instance. The computing instance may include at least one of a physical host (computing device), a virtual machine, and a container. Further, there may be one or more computing instances. For example, the receiving module 510 may include code that is run on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed in a same virtual private cloud (virtual private cloud, VPC), or may be distributed in a plurality of VPCs. Generally, one VPC is set in one region. A communication gateway needs to be set in each VPC for communication between two VPCs in a same region and cross-region communication between VPCs in different regions. The VPCs are interconnected through the communication gateway.

The module is used as an example of a hardware functional unit, and the receiving module 510 may include at least one computing device, for example, a server. Alternatively, the receiving module 510 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the receiving module 510 may be distributed in a same region, or may be distributed in different regions. A plurality of computing devices included in the receiving module 510 may be distributed in a same AZ, or may be distributed in different AZs. Similarly, a plurality of computing devices included in the receiving module 510 may be distributed in a same VPC, or may be distributed in a plurality of VPCs. The plurality of computing devices may be any combination of computing devices such as the server, the ASIC, the PLD, the CPLD, the FPGA, and the GAL.

It should be noted that, in another embodiment, the receiving module 510 may be configured to perform any step in the cloud service-based transaction processing method, the processing module 520 may be configured to perform any step in the cloud service-based transaction processing method, the determining module 530 may be configured to perform any step in the cloud service-based transaction processing method, the determining module 530 may be configured to perform any step in the cloud service-based transaction processing method, and the feedback module 540 may be configured to perform any step in the cloud service-based transaction processing method. Steps implemented by the receiving module 510, the processing module 520, the determining module 530, and the feedback module 540 may be specified based on a requirement. The receiving module 510, the processing module 520, the determining module 530, and the feedback module 540 respectively implement different steps in the cloud service-based transaction processing method, to implement all functions of the cloud service-based transaction processing apparatus.

Based on a same technical concept, an embodiment of this application further provides a cloud service-based transaction processing apparatus. As shown in FIG. 6, the apparatus is used in a target replica node of a cloud storage system. The cloud storage system includes a proxy node, a master node, and a plurality of replica nodes. The apparatus includes the following modules.

A receiving module 610 is configured to receive a transaction processing request sent by target user equipment, where the transaction processing request includes a write operation and a read operation. The receiving module 610 may specifically implement a receiving function in step 201 and another implicit step.

A sending module 620 is configured to:
send the write operation to the master node; after receiving a log reception notification sent by at least one replica node, send the read operation to the target replica node in the at least one replica node, where the log reception notification indicates that the replica node has received a redo log that is sent by the master node and that corresponds to the write operation; and receive data that is fed back by the target replica node and that corresponds to the read operation, and send the data to the target user equipment. The sending module 620 may specifically implement sending functions in step 207, step 208, and step 212, and another implicit step.

In a possible implementation, the sending module 620 is configured to:
after receiving a 1^{st} log reception notification, send a read operation to the target replica node that sends the 1^{st} log receiving notification.

In a possible implementation, the sending module 620 is configured to:
after receiving log reception notifications sent by all replica nodes in the plurality of replica nodes, select the target replica node from the plurality of replica nodes, and send the read operation to the target replica node.

In a possible implementation, the redo log includes a first master channel identifier, the first master channel identifier corresponds to a first master channel between the proxy node and the master node, and the first master channel is used to transmit a write operation of the target user equipment.

The sending module 620 is further configured to:
send a first replica channel identifier corresponding to the read operation to the target replica node, where the first replica channel identifier corresponds to a first replica channel between the proxy node and the target replica node, and the first replica channel is used to transmit a read operation of the target user equipment.

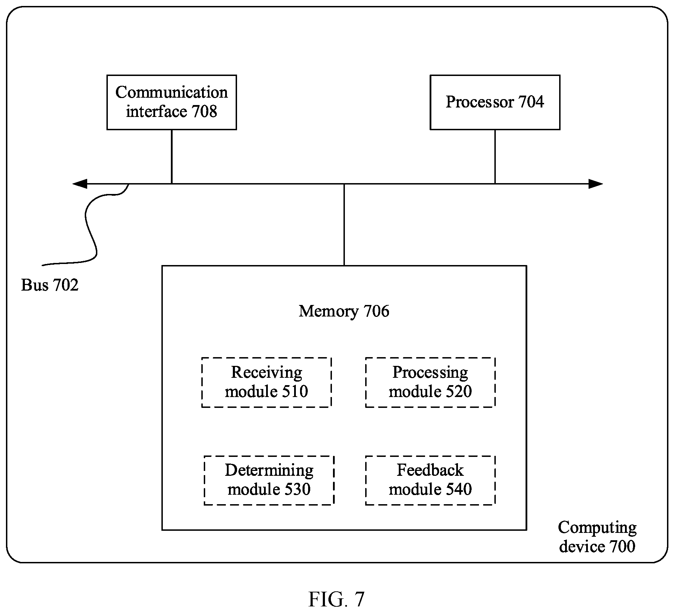

An embodiment of this application further provides a computing device 700. As shown in FIG. 7, the computing device 700 includes a bus 702, a processor 704, a memory 706, and a communication interface 708. The processor 704, the memory 706, and the communication interface 708 communicate with each other through the bus 702. The computing device 700 may be a server or a terminal device. It should be understood that quantities of processors and memories in the computing device 700 are not limited in this application.

The bus 702 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, the bus is represented by using only one line in FIG. 7. However, it does not mean that there is only one bus or only one type of bus. The bus 702 may include a path for information transfer between various components (for example, the memory 706, the processor 704, and the communication interface 708) of the computing device 700.

The processor 704 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 706 may include a volatile memory (volatile memory), for example, a random access memory (random access memory, RAM). The memory 706 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 706 stores executable program code. The processor 704 executes the executable program code to respectively implement functions of the receiving module 510, the processing module 520, the determining module 530, and the feedback module 540, to implement a cloud service-based transaction processing method. That is, the memory 706 stores instructions used to perform the cloud service-based transaction processing method.

Alternatively, the memory 706 stores executable code, and the processor 704 executes the executable code to respectively implement functions of the foregoing cloud service-based transaction processing apparatus, to implement the cloud service-based transaction processing method. That is, the memory 706 stores instructions used to construct a three-dimensional model of virtual space.

The communication interface 708 uses a transceiver module, for example, but not limited to, a network interface card or a transceiver, to implement communication between the computing device 700 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

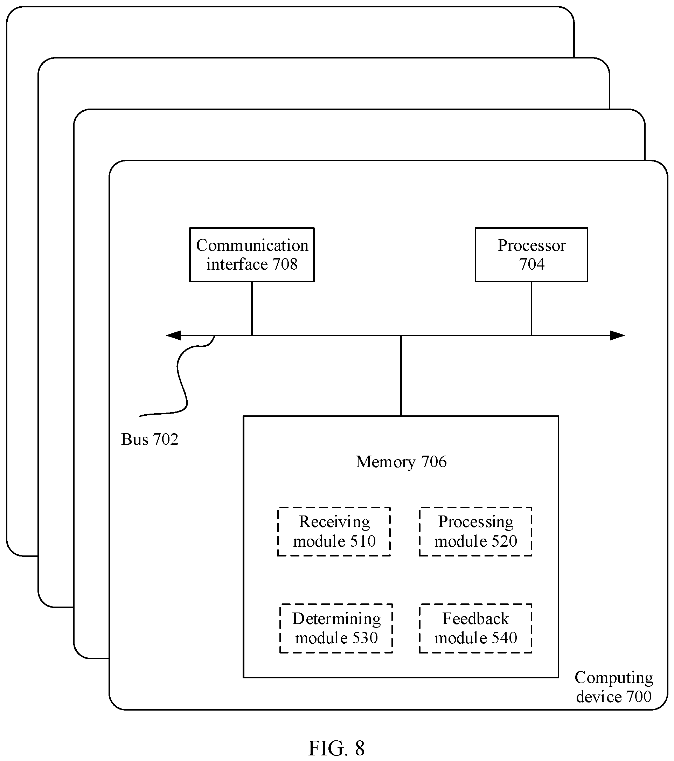

As shown in FIG. 8, the computing device cluster includes at least one computing device 700. The memory 706 in one or more computing devices 700 in the computing device cluster may store same instructions used to perform a cloud service-based transaction processing method.

In some possible implementations, alternatively, the memory 706 in one or more computing devices 700 in the computing device cluster may separately store part of instructions used to perform the cloud service-based transaction processing method. In other words, a combination of one or more computing devices 700 may jointly execute the instructions used to perform the cloud service-based transaction processing method.

It should be noted that memories 706 in different computing devices 700 in the computing device cluster may store different instructions that are respectively used to perform some functions of the cloud service-based transaction processing apparatus. In other words, instructions stored in the memories 706 in different computing devices 700 may implement functions of one or more of the receiving module 510, the processing module 520, the determining module 530, and the feedback module 540.

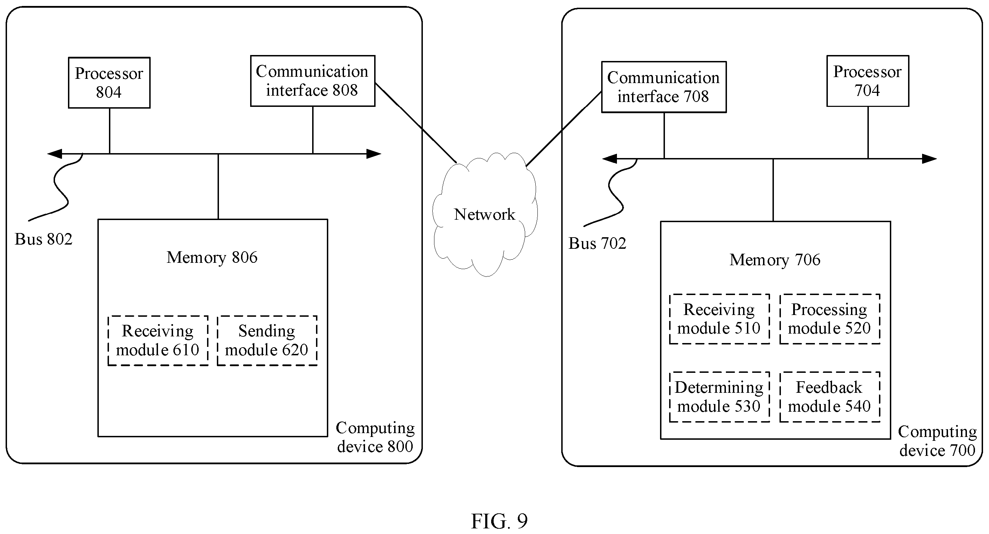

In some possible implementations, the one or more computing devices in the computing device cluster may be connected through a network. The network may be a wide area network, a local area network, or the like. FIG. 9 shows a possible implementation. As shown in FIG. 9, two computing devices 700 and 800 are connected through a network. Specifically, the computing devices are connected to the network through communication interfaces of the computing devices. In this possible implementation, a memory 706 in the computing device 700 stores instructions for implementing the function of the receiving module 510. In addition, a memory 806 in a computing device 800 stores instructions for implementing a function of the sending module 620.

A connection manner between computing device clusters shown in FIG. 9 may be based on a consideration that a transaction needs to be processed in the cloud service-based transaction processing method provided in this application. Therefore, it is considered that functions of the receiving module 610 and the sending module 620 are performed by the computing device 800.

It should be understood that functions of the computing device 700 shown in FIG. 9 may alternatively be completed by a plurality of computing devices 700. Similarly, a function of the computing device 800 may alternatively be completed by a plurality of computing devices 800.

An embodiment of this application further provides a computer program product including instructions. The computer program product may be a software or program product that includes the instructions and that can be run on a computing device or stored in any usable medium. When the computer program product is run on at least one computing device, the at least one computing device is enabled to perform the cloud service-based transaction processing method.

An embodiment of this application further provides a computer-readable storage medium. The computer-readable storage medium may be any usable medium that can be stored by a computing device, or a data storage device like a data center including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions. The instructions instruct the computing device to perform the cloud service-based transaction processing method, or instructs the computing device to perform the cloud service-based transaction processing method.

Finally, it should be noted that the foregoing embodiments are merely intended for describing the technical solutions of this application, rather than limiting this application. Although this application is described in detail with reference to the foregoing embodiments, a person of ordinary skill in the art should understand that they can still modify the technical solutions described in the foregoing embodiments or make equivalent replacements on some technical features thereof, without departing from the protection scope of the technical solutions in embodiments of this application.

## Claims

1. A cloud service-based transaction processing method, wherein the method is performed by a target replica node of a cloud storage system, the cloud storage system comprises a proxy node, a master node, and a plurality of replica nodes, the plurality of replica nodes comprise the target replica node, and the method comprises:
receiving a redo log sent by the master node, wherein the redo log comprises a write operation;
processing the redo log, and sending a log reception notification to the proxy node, wherein the log reception notification indicates that the target replica node has received the redo log that is sent by the master node and that corresponds to the write operation;
receiving a read operation that is sent by the proxy node and that belongs to a same transaction as the write operation;
determining, based on a modification record generated during processing of the redo log, data corresponding to the read operation; and
feeding back the data to the proxy node.

2. The method according to claim 1, wherein the redo log further comprises a first master channel identifier, the first master channel identifier corresponds to a first master channel between the proxy node and the master node, and the first master channel is used to transmit a write operation of target user equipment; and
before determining, based on the modification record generated during processing of the redo log, the data corresponding to the read operation, the method further comprises:
obtaining a first replica channel identifier corresponding to the read operation sent by the proxy node, wherein the first replica channel identifier corresponds to a first replica channel between the proxy node and the target replica node, and the first replica channel is used to transmit a read operation of the target user equipment; and
obtaining, based on the first replica channel identifier, the modification record generated during processing of the redo log.

3. The method according to claim 2, wherein obtaining, based on the first replica channel identifier, the modification record generated during processing of the redo log comprises:
determining, based on the first replica channel identifier, a target transaction that is established during processing of the redo log and that corresponds to the redo log; and
obtaining a modification record corresponding to the target transaction.

4. The method according to claim 3, wherein the target replica node stores a first correspondence between the master channel identifier and the replica channel identifier;
the method further comprises:
correspondingly adding, during processing of the redo log, the first master channel identifier in the redo log and the target transaction that is established during processing of the redo log and that corresponds to the redo log into a second correspondence between a master channel identifier and a transaction; and
determining, based on the first replica channel identifier, the target transaction that is established during processing of the redo log and that corresponds to the redo log comprises:
determining, based on the first correspondence, the first master channel identifier corresponding to the first replica channel identifier; and
determining, based on the second correspondence, the target transaction corresponding to the first master channel identifier.

5. The method according to claim 3, wherein the target replica node stores a first correspondence between the master channel identifier and the replica channel identifier;
the method further comprises:
during processing of the redo log, determining, based on the first correspondence, the first replica channel identifier corresponding to the first master channel identifier in the redo log; and
correspondingly adding the first replica channel identifier and the target transaction that is established during processing of the redo log and that corresponds to the redo log into a third correspondence between a replica channel identifier and a transaction; and
determining, based on the first replica channel identifier, the target transaction that is established during processing of the redo log and that corresponds to the redo log comprises:
searching the third correspondence for the corresponding target transaction based on the first replica channel identifier.

6. The method according to any one of claims 1 to 5, wherein before determining, based on the modification record generated during processing of the redo log, the data corresponding to the read operation, the method further comprises:
determining that the modification record generated during processing of the redo log is not written to a disk.

7. A cloud service-based transaction processing method, wherein the method is performed by a proxy node of a cloud storage system, the cloud storage system comprises the proxy node, a master node, and a plurality of replica nodes, and the method comprises:
receiving a transaction processing request sent by target user equipment, wherein the transaction processing request comprises a write operation and a read operation;
sending the write operation to the master node;
sending the read operation to a target replica node in at least one replica node after receiving a log reception notification sent by the at least one replica node, wherein the log reception notification indicates that the replica node has received a redo log that is sent by the master node and that corresponds to the write operation; and
receiving data that is fed back by the target replica node and that corresponds to the read operation, and sending the data to the target user equipment.

8. The method according to claim 7, wherein sending the read operation to the target replica node in the at least one replica node after receiving the log reception notification sent by the at least one replica node comprises:
after receiving a 1^{st} log reception notification, sending the read operation to a target replica node that sends the 1^{st} log reception notification.

9. The method according to claim 7, wherein sending the read operation to the target replica node of the at least one replica node after receiving the log reception notification sent by the at least one replica node comprises:
after receiving log reception notifications sent by all replica nodes in the plurality of replica nodes, selecting a target replica node from the plurality of replica nodes, and sending the read operation to the target replica node.

10. The method according to any one of claims 7 to 9, wherein the redo log comprises a first master channel identifier, the first master channel identifier corresponds to a first master channel between the proxy node and the master node, and the first master channel is used to transmit a write operation of the target user equipment; and
after receiving the log reception notification sent by the at least one replica node, the method further comprises:
sending a first replica channel identifier corresponding to the read operation to the target replica node, wherein the first replica channel identifier corresponds to a first replica channel between the proxy node and the target replica node, and the first replica channel is used to transmit a read operation of the target user equipment.

11. A cloud service-based transaction processing apparatus, wherein the apparatus is used in a target replica node of a cloud storage system, the cloud storage system comprises a proxy node, a master node, and a plurality of replica nodes, the plurality of replica nodes comprise the target replica node, and the apparatus comprises:
a receiving module, configured to receive a redo log sent by the master node, wherein the redo log comprises a write operation;
a processing module, configured to process the redo log and send a log reception notification to the proxy node, wherein the log reception notification indicates that the target replica node has received the redo log that is sent by the master node and that corresponds to the write operation, wherein
the receiving module is further configured to receive a read operation that is sent by the proxy node and that belongs to a same transaction as the write operation;
a determining module, configured to determine, based on a modification record generated during processing of the redo log, data corresponding to the read operation; and
a feedback module, configured to feed back the data to the proxy node.

12. The apparatus according to claim 11, wherein the redo log further comprises a first master channel identifier, the first master channel identifier corresponds to a first master channel between the proxy node and the master node, and the first master channel is used to transmit a write operation of target user equipment; and
the determining module is further configured to:
obtain a first replica channel identifier corresponding to the read operation sent by the proxy node, wherein the first replica channel identifier corresponds to a first replica channel between the proxy node and the target replica node, and the first replica channel is used to transmit a read operation of the target user equipment; and
obtain, based on the first replica channel identifier, the modification record generated during processing of the redo log.

13. The apparatus according to claim 12, wherein the determining module is configured to:
determine, based on the first replica channel identifier, a target transaction that is established during processing of the redo log and that corresponds to the redo log; and
obtain a modification record corresponding to the target transaction.

14. The apparatus according to claim 13, wherein the target replica node stores a first correspondence between the master channel identifier and the replica channel identifier;
the apparatus further comprises:
an adding module, configured to correspondingly add, during processing of the redo log, the first master channel identifier in the redo log and the target transaction that is established during processing of the redo log and that corresponds to the redo log into a second correspondence between a master channel identifier and a transaction; and
the determining module is configured to:
determine, based on the first correspondence, the first master channel identifier corresponding to the first replica channel identifier; and
determine, based on the second correspondence, the target transaction corresponding to the first master channel identifier.

15. The apparatus according to claim 13, wherein the target replica node stores a first correspondence between the master channel identifier and the replica channel identifier;
the adding module is further configured to:
during processing of the redo log, determine, based on the first correspondence, the first replica channel identifier corresponding to the first master channel identifier in the redo log; and
correspondingly add the first replica channel identifier and the target transaction that is established during processing of the redo log and that corresponds to the redo log into a third correspondence between a replica channel identifier and a transaction; and
the determining module is configured to:
search the third correspondence for the corresponding target transaction based on the first replica channel identifier.

16. The apparatus according to any one of claims 11 to 15, wherein the determining module is further configured to:
determine that the modification record generated during processing of the redo log is not written to a disk.

17. A cloud service-based transaction processing apparatus, wherein the apparatus is used in a proxy node of a cloud storage system, the cloud storage system comprises the proxy node, a master node, and a plurality of replica nodes, and the apparatus comprises:
a receiving module, configured to receive a transaction processing request sent by target user equipment, wherein the transaction processing request comprises a write operation and a read operation; and
a sending module, configured to:
send the write operation to the master node;
send the read operation to a target replica node in at least one replica node after receiving a log reception notification sent by the at least one replica node, wherein the log reception notification indicates that the replica node has received a redo log that is sent by the master node and that corresponds to the write operation; and
receive data that is fed back by the target replica node and that corresponds to the read operation, and send the data to the target user equipment.

18. The apparatus according to claim 17, wherein the sending module is configured to:
after receiving a 1^{st} log reception notification, send the read operation to a target replica node that sends the 1^{st} log reception notification.

19. The apparatus according to claim 17, wherein the sending module is configured to:
after receiving log reception notifications sent by all replica nodes in the plurality of replica nodes, select a target replica node from the plurality of replica nodes, and send the read operation to the target replica node.

20. The apparatus according to any one of claims 17 to 19, wherein the redo log comprises a first master channel identifier, the first master channel identifier corresponds to a first master channel between the proxy node and the master node, and the first master channel is used to transmit a write operation of the target user equipment; and
the sending module is further configured to:
send a first replica channel identifier corresponding to the read operation to the target replica node, wherein the first replica channel identifier corresponds to a first replica channel between the proxy node and the target replica node, and the first replica channel is used to transmit a read operation of the target user equipment.

21. A computing device cluster, comprising at least one computing device, wherein each computing device comprises a processor and a memory; and
the processor of the at least one computing device is configured to execute instructions stored in the memory of the at least one computing device, to enable the computing device cluster to perform the method according to any one of claims 1 to 10.

22. A computer program product comprising instructions, wherein when the instructions are run by a computing device cluster, the computing device cluster is enabled to perform the method according to any one of claims 1 to 6.

23. A computer program product comprising instructions, wherein when the instructions are run by a computing device cluster, the computing device cluster is enabled to perform the method according to any one of claims 7 to 10.

24. A computer-readable storage medium, comprising computer program instructions, wherein when the computer program instructions are executed by a computing device cluster, the computing device cluster performs the method according to any one of claims 1 to 6.

25. A computer-readable storage medium, comprising computer program instructions, wherein when the computer program instructions are executed by a computing device cluster, the computing device cluster performs the method according to any one of claims 7 to 10.
